(19) Europäisches Patentamt
European Patent Office
Office européen des brevets

(11) **EP 2 940 461 A1**

(12) **EUROPEAN PATENT APPLICATION**

(43) Date of publication:
**04.11.2015 Bulletin 2015/45**

(51) Int Cl.:
***G01N 23/20*** (2006.01)   ***G01N 23/207*** (2006.01)
***G01L 1/25*** (2006.01)

(21) Application number: **14166206.4**

(22) Date of filing: **28.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Rigaku Europe SE**
**76275 Ettlingen (DE)**

(72) Inventors:
• **Ulyanenkov, Alex**
**76187 Karslruhe (DE)**

• **Benediktovitch, Andrei**
**220119 Minsk (BY)**
• **Ulyanenkova, Tatjana**
**76187 Karlsruhe (DE)**

(74) Representative: **Hoeger, Stellrecht & Partner**
**Patentanwälte mbB**
**Uhlandstrasse 14c**
**70182 Stuttgart (DE)**

(54) **Method for determining a residual stress gradient in a sample**

(57)    The present invention relates to a method for determining a residual stress gradient in a sample using X-ray diffraction, wherein the sample is supported on a sample holder defining a sample plane, the method comprising the steps of

- irradiating a beam from an X-ray source onto the sample and detecting a beam diffracted by the sample with an X-ray detector having two degrees of freedom, wherein the directions of the incident beam and/or the diffracted beam are varied in relation to the sample and the position of the X-ray detector is varied in two degrees of freedom, and

- determining the values $\sin^2\Psi$ and $\tau\mu$, which are representative for the residual stress gradient in the sample, as a function of the X-ray source and x-ray detector positions taking into account the two degrees of freedom of the detector, wherein $\Psi$ is the polar angle, $\tau$ is the penetration depth of the beam into the sample, and $\mu$ is the mass attenuation coefficient of the sample.

In order to improve this method, it is suggested that the variation of the directions of the incident beam and/or the diffracted beam comprises a rotation of the diffracted beam by an angle $2\theta\chi$ within a plane that is inclined against the sample plane, designated in-plane arm rotation.

**FIG. 1**

EP 2 940 461 A1

**Description**

The present invention relates to a method for determining a residual stress gradient in a sample using X-ray diffraction, wherein the sample is supported on a sample holder defining a sample plane, the method comprising the steps of

- irradiating a beam from an X-ray source onto the sample and detecting a beam diffracted by the sample with an X-ray detector having two degrees of freedom, wherein the directions of the incident beam and/or the diffracted beam are varied in relation to the sample and the position of the X-ray detector is varied in two degrees of freedom, and
- determining the values $\sin^2\Psi$ and $\tau\mu$, which are representative for the residual stress gradient in the sample, as a function of the X-ray source and x-ray detector positions taking into account the two degrees of freedom of the detector, wherein $\Psi$ is the polar angle, $\tau$ is the penetration depth of the beam into the sample, and $\mu$ is the mass attenuation coefficient of the sample.

BACKGROUND OF THE INVENTION

X-ray measurements are non-destructive techniques to determine residual stress gradients in various materials, such as thin, hard coatings which are used for certain applications in the automotive and engineering industries. In particular, several techniques of X-ray stress gradient analysis (XSA) are known in the art.

However, one drawback of these standard techniques, like the $\sin^2\Psi$ method, is that they provide only the averaged stress value over the irradiated gauge volume. To obtain stress gradient profiles from a non-linear $\sin^2\Psi$ plot, one needs to assume an *a priori* model of stress distribution (see, e.g., M. Bartosik et al., Adv. Eng. Mat. 2011, Vol. 13, No. 8, pp. 705-711). To analyze the residual stress gradient in thin films and surface coatings, new methods have been developed during the past years, such as the multiple HKL method (see U. Welzel et al., J. Appl. Cryst. 2005, Vol. 38, pp. 1-29), which allows to obtain stress distributions in thin surface layers (about a tenth of a nanometer), tau-scans in the scattering vector mode (see Ch. Genzel, J. Appl. Cryst. 1999, Vol. 32, pp. 770-778), small gauge-volume profiling, which is used in the energy-dispersive mode of diffraction ( see Ch. Genzel et al., J. Strain Analysis 2011, Vol. 46, pp. 615-625; and Ch. Genzel et al., in Modern Diffraction Methods, Wiley-VCH, Weinheim, 2012, pp. 127-154). The main disadvantage of these latter techniques is that all the methods can be realized only at synchrotron facilities.

In works of Erbacher et al. (see Th. Erbacher et al., J. Appl. Cryst. 2008, Vol. 41, pp. 377-385 and Kumar et al., J. Appl. Cryst. 2006, Vol. 39, pp. 633-646), it was proposed to perform $\sin^2\Psi$ scans by varying at the same time three goniometer angles (incidence, $2\theta$ and inclination angles), which are calculated in such a way that the penetration depth is kept constant while varying the sample inclination angle. This method is suitable for stress gradient analysis, but the main disadvantage is that a sample inclination is required, which can be difficult to handle for larger samples, or with the used sample attachements (e.g., during *in situ* high-tremperature studies).

Accordingly, there is a need for an improved technique of X-ray diffraction stress gradient analysis, which allows a measurement in different penetration depths $\tau$ of the sample, especially covering a large area of $\sin^2\Psi$ - $\tau$ values, and which does not require a sample inclination.

SUMMARY OF THE INVENTION

According to the present invention, this problem is solved by a method as mentioned at the beginning, wherein the variation of the directions of the incident beam and/or the diffracted beam comprises a rotation of the diffracted beam by an angle $2\theta\chi$ within a plane that is inclined against the sample plane, designated in-plane arm rotation.

As will be explained in more detail below, it has been found by the inventors that this method enables a very accurate analysis of residual stress gradients, especially in different depths of thin films or surface coatings, by the provision of the in-plane arm rotation $2\theta\chi$ as an additional degree of freedom. This softens the geometrical restrictions and provides access to additional regions of penetration depth (at $\mu$m level) and a large area of $\sin^2\Psi$ values.

Typically, in the inventive method, the variation of the directions of the incident beam and/or the diffracted beam further comprises one or more of the following: an inclination of the incident beam against the sample plane by an angle $\theta_s$, an inclination of the plane of in-plane arm rotation against the sample plane by an angle $\theta_d$, and a rotation of the sample around the normal of the sample plane by an angle $\varphi$.

Optionally, the inventive method may also comprise an inclination of the sample against the sample plane by an angle $\chi$, although such an inclination is not necessary according to the invention, as mentioned above.

In a preferred embodiment of the invention, the values $\sin^2\Psi$ and $\tau\mu$, which are representative for the residual stress gradient in the sample, are determined as a function of the X-ray diffraction parameters according to the following equations:

$$\sin^2\psi\,(\theta_s,\theta_d,2\theta\chi,\chi)=1-\frac{(\cos\chi\,(\cos2\theta\chi\sin\theta_d+\sin\theta_s)+\sin2\theta\chi\sin\chi)^2}{2-2\cos(\theta_d+\theta_s)\cos2\theta\chi}$$

$$\tau\mu(\theta_s,\theta_d,2\theta\chi)=\frac{1}{\csc\theta_s+\dfrac{1}{\cos2\theta\chi\sin\theta_d}}.$$

These equations in case of no sample inclination (at $\chi = 0$) result in the following general correlations:

$$\theta_s=\arcsin\left[\left(\sqrt{1-\sin^2\psi}-\sqrt{1-\sin^2\psi-2\tau\mu\sqrt{1-\sin^2\psi}\csc\theta_B}\right)\sin\theta_B\right],$$

$$\theta_d=\arccos\pm\frac{1+P\sin\theta_s}{\sqrt{1+P^2+2P\sin\theta_s}},$$

$$2\theta\chi=\arccos\frac{\cos2\theta_B}{\cos(\theta_s+\theta_d)}$$

wherein the parameter P is determined by

$$P=\frac{\left(\sqrt{1-\sin^2\psi}+\sqrt{1-\sin^2\psi-2\tau\mu\sqrt{1-\sin^2\psi}\csc\theta_B}\right)\sin\theta_B}{\cos2\theta_B},$$

wherein $2\theta_B$ is the Bragg angle of the sample material, and the other parameters are defined as above.

Preferably, the inventive method is perfomed using an X-ray diffractometer comprising the X-ray source, the X-ray detector and the sample holder. The in-plane arm rotation is then accomplished by a corresponding movement of the diffractometer arm holding the X-ray detector. In general, the variations of $\theta_s$, $\theta_d$ and $2\theta\chi$ are effected by moving the X-ray source and/or the X-ray detector, and the variations of $\varphi$ and $\chi$ are effected by moving the sample.

Advantageously, the penetration depth $\tau$ is between 0 and about $1/(2\mu)$. As already mentioned, the invention allows a stress gradient analysis in different depths of the sample.

In a preferred embodiment of the invention, the sample is a film or surface coating. Such thin layers, especially of hard materials, have various applications in the automotive and engineering industries, where the analysis of residual stress in the materials is an important issue. For example, the sample may be a titanium nitride (TiN) coating.

Typically, the film or coating has a thickness of about 1 to about 15 $\mu$m.

BRIEF DESCRIPTION OF THE DRAWINGS

These and further advantages of the invention will be explained in connection with the following preferred embodiments, making reference to the figures.

The figures show:

Fig. 1: a schematic illustration showing the geometry of the relevant X-ray diffraction parameters;

Fig. 2: diagrams illustrating the accessible areas of $\sin^2\Psi$ and $\tau\mu$ values at various Bragg angles according to the prior art; and

Fig. 3: a diagram illustrating the accessible areas of $\sin^2\Psi$ and $\tau\mu$ values and the positions for $\sin^2\Psi$ measurements according to the present invention.

DETAILED DESCRIPTION OF THE INVENTION

The residual stresses in thin films may vary with the depth. In some cases, the stress gradients are especially created to improve the properties of materials and coatings which are used for producing various cutting tools and drills.

Due to its non-destructive nature, X-ray diffraction is often used to analyze the residual stress in polycrystalline samples. Usually, the positions of the diffraction lines are measured from several Bragg (hkl)-reflections at different inclination angles of the diffraction vector to the surface normal and at several rotation angles around the normal. From the Bragg reflections, the interplanar distances can be found and the lattice deformation can be evaluated. The components of the stress tensor are calculated from obtained deformations. Usually, a $\sin^2\Psi$ method is used for evaluation, which is based on the dependence of the deformations from the $\sin^2\Psi$ value [1,2,3,4]. Evaluation of the stress in thin layers is non-trivial due to low signals, the presence of stress gradient, texture, phase non-uniformity etc. Usually, additional measurements to control the penetration depth of the X-ray radiation in the measurements of stress are not taken. In this case, the obtained stress values are averaged over the gauge volume.

Very thin layers can be investigated by grazing-incidence X-ray diffraction (GIXRD), which provides stress gradient profiles within the depth of tens of a nanometer. The residual stress in thin films and surface coatings on the $\mu$m scale can be obtained from non-linear $\sin^2\Psi$ plot, if one assume an *a priori* model of stress distribution [5]. To obtain model-free stress distribution in Laplace space, one has to use dedicated techniques, e.g., the scattering vector method [6]. At synchrotron facilities, there are a number of additional techniques available, e.g., energy-dispersive methods [7] and through-surface strain scanning.

In papers [8] and [9], it was proposed to perform $\sin^2\Psi$ scans by varying at the same time three goniometer angles (incidence, $2\theta$ and inclination angles), which are calculated in such a way that the penetration depth is kept constant while varying the sample inclination angle. Accessible values of the penetration depth and $\sin^2\Psi$ are determined by the available geometrical configurations of the X-ray source, the sample and the X-ray detector. This allows to obtain a series of $\sin^2\Psi$ plots each corresponding to a fixed information depth; from this dataset, stress profiles in Laplace space can be directly obtained.

According to the present invention, it is shown that by using in-plane arm rotation and the combination of several reflections, it is possible to span large areas of $\sin^2\Psi$ and penetration depth values $\tau$ even without sample inclination. In the following Examples, the inventive method is applied to determine stress gradients of blasted hard TiN coatings on a WC/Co substrate. The Rigaku SmartLab diffractometer was used because it provides the required additional degree of freedom due to its in-plane arm, which softens geometrical restrictions and provides access to additional regions of $\sin^2\Psi$ and $\tau$ values.

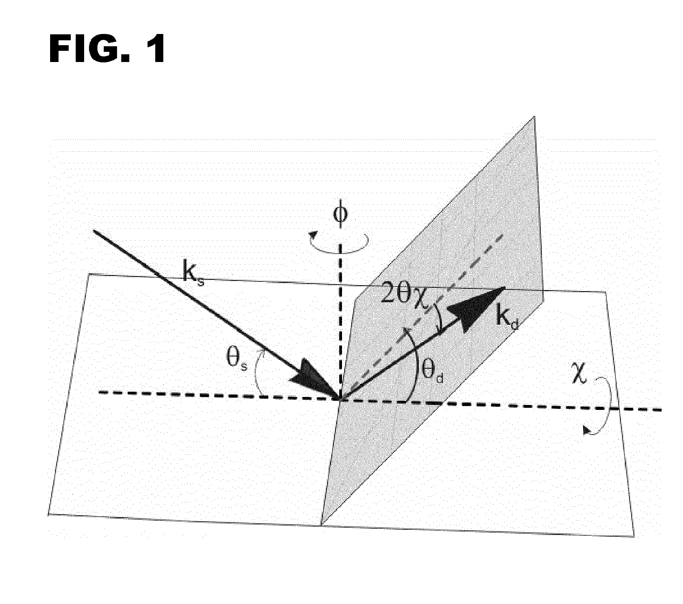

In the case of an in-plane diffractometer, the positions of the X-ray source, the sample and the X-ray detector are determined by five angles, as can be seen in the schematic illustration of **Figure 1**. These angles are:

$\theta_s$: the angle between the line connecting the sample and the x-ray source and the sample plane,
$\theta_d$: the angle between the angle of in-plane arm rotation and the sample plane,
$2\theta\chi$: the angle of the in-plane arm rotation,
$\varphi$: the angle of the sample rotation around the normal of the sample plane, and
$\chi$: the angle of the sample inclination (tilt) against the sample plane.

The shaded area in Figure 1 represents the plane of in-plane arm rotation.

In the reference frame of the sample (see [10]), the components of the wave vector $\mathbf{k}_s$ corresponding to the incident wave are:

$$k_s(\theta_s, \chi, \phi) = k_0(\sin\theta_s \sin\chi \sin\phi + \cos\theta_s \cos\phi, \cos\theta_s \sin\phi - \sin\theta_s \sin\chi \cos\phi, -\sin\theta_s \cos\chi), (1)$$

wherein $k_0 = 2\pi/\lambda$, and $\lambda$ is the wavelength of the used radiation.

The components of the wave vector $\mathbf{k}_d$ corresponding to the diffracted wave going from the sample to detector are:

$$k_s(\theta_s, 2\theta\chi, \chi, \phi)$$
$$= k_0(\sin\phi\,(\sin 2\theta\chi \cos\chi - \sin\theta_d \cos 2\theta\chi \sin\chi)$$
$$+ \cos\theta_d \cos 2\theta\chi \cos\phi, \cos\phi\,(\sin\theta_d \cos 2\theta\chi \sin\chi - \sin 2\theta\chi \cos\chi)$$
$$+ \cos\theta_d \cos 2\theta\chi \sin\phi, \cos 2\theta\chi \cos\chi \sin\theta_d + \sin 2\theta\chi \sin\chi), (2)$$

The unit vector along the diffraction vector is then given by

$$n(\theta_s, \theta_d, 2\theta\chi, \chi, \phi) = \frac{k_d(\theta_d, 2\theta\chi, \chi, \phi) - k_s(\theta_s, \chi, \phi)}{|k_d(\theta_d, 2\theta\chi, \chi, \phi) - k_s(\theta_s, \chi, \phi)|}. (3)$$

The fundamental equation for stress measurement, expressed in terms of the angles $\theta_s$, $\theta_d$, $2\theta\chi$, $\chi$ and $\varphi$, is obtained by substitution of equation (3) in the following formula:

$$\epsilon(\theta_s, \theta_d, 2\theta\chi, \chi, \phi) = n_i(\theta_s, \theta_d, 2\theta\chi, \chi, \phi)\epsilon_{ij}n_j(\theta_s, \theta_d, 2\theta\chi, \chi, \phi). (4)$$

Below, a rotationally symmetric biaxial stress state and a set angle of $\varphi=0$ are assumed for reasons of simplicity. This assumption does not affect the general conclusions, but makes the corresponding equations more compact. Taking use of X-ray Elastic Constants $S_1^{hkl}$, $1/2S_2^{hkl}$ from equation (4), one may obtain the usual $\sin^2\Psi$ dependence, the angle $\Psi$ between the sample normal and the diffraction vector collinear to equation (3) is expressed via $\theta_s$, $\theta_d$, $20_{\chi,\chi}$ as

$$\cos\psi\,(\theta_s, \theta_d, 2\theta\chi, \chi) = \frac{\cos\chi\,(\cos 2\theta\chi \sin\theta_d + \sin\theta_s) + \sin 2\theta\chi \sin\chi}{\sqrt{2 - 2\cos(\theta_d + \theta_s)\cos 2\theta\chi}}. (5a)$$

The unit vector n in the sample reference frame [10] in terms of the angles $\varphi$ and $\Psi$ used for residual stress analysis is expressed as

$$n(\varphi, \psi) = (\sin\psi \cos\varphi, \sin\psi \sin\varphi, \cos\psi), (3')$$

where from (3) and (3') the angle $\varphi$ is expressed in terms of used instrumental angles as:

$$\varphi(\theta_s, \theta_d, 2\theta\chi, \chi, \phi)$$

$$= \arctan\frac{\cos\phi(\sin\chi\,(\sin\theta_d\cos 2\theta\chi + \sin\theta_s) - \sin 2\theta\chi\cos\chi) + \sin\phi\,(\cos\theta_d\cos 2\theta\chi - \cos\theta_s)}{\sin\phi\,(\sin 2\theta\chi\cos\chi - \sin\chi\,(\sin\theta_d\cos 2\theta\chi + \sin\theta_s)) + \cos\theta_d\cos 2\theta\chi\cos\phi - \cos\theta_s\cos\phi}\,.\,(5b)$$

The absolute value of the diffraction vector is determined by the angle $2\theta$ between equations (1) and (2), the expression in terms of angles $\theta_s$, $\theta_d$, $2\theta_\chi$ is

$$\cos 2\theta(\theta_s, \theta_d, 2\theta\chi) = \cos 2\theta\chi\cos(\theta_d + \theta_s)\,.\,(6)$$

The penetration depth $\tau$ is determined by the angle $\alpha$ between the source and the sample surface, and the angle $\beta$ between the detector and the sample surface:

$$\tau = \frac{1}{\mu}\frac{\sin\alpha\sin\beta}{\sin\alpha + \sin\beta}\,(7)$$

wherein $\mu$ is the mass attenuation coefficient at the given wavelength. In terms of angles $\theta_s$, $\theta_d$, $2\theta\chi$, $\chi$

$$\sin\alpha(\chi, \theta_s) = \sin\theta_s\cos\chi\,,$$

$$\sin\beta(\chi, \theta_s, \theta_d) = \cos 2\theta\chi\cos\chi\sin\theta_d + \sin 2\theta\chi\sin\chi$$

and

$$\sin^2\psi(\theta_s, \theta_d) = 1 + \frac{(\cos 2\theta\chi\sin\theta_d + \sin\theta_s)^2}{-2 + 2\cos(\theta_d + \theta_s)\cos 2\theta\chi}\,.\qquad(8)$$

$$\tau\mu(\theta_s, \theta_d) = \frac{1}{\csc\theta_s + \dfrac{1}{\cos 2\theta\chi\sin\theta_d}}\,.\,(9)$$

To perform x-ray residual stress measurements with depth resolution, one has to vary $2\theta$ values close to the Bragg angle to find the peak position, and this scan should be done at different $\sin^2\psi$ values at fixed penetration depth. From the $\sin^2\psi$ plots measured at various penetration depths, one gets the values of residual stress corresponding to different penetration depths. The larger an area of $\sin^2\psi$ and $\tau$ values can be accessed, the more detailed knowledge about residual stress profile can be gained.

Equations (5), (6) and (9) impose three conditions on four angular variables $\theta_s$, $\theta_d$, $2\theta\chi$ and $\chi$. This means that, in general, the measurement of peak positions for given $\sin^2\psi$ and $\tau$ values are performed at different geometrical configurations. As we will see below, in the case of no sample tilt (at $\chi = 0$), the accessible area of $\sin^2\psi$ and $\tau$ values do not reduce much, so one can simplify the measurements by keeping the sample without movement.

In this case, for given Bragg angles $2\theta_B$, $\sin^2\psi$ and $\tau$ values using equations (5a), (5b), (6) and (9), one may obtain the positions of source and detector for scanning according to

$$\theta_s = \arcsin\left[\left(\sqrt{1-\sin^2\psi} - \sqrt{1-\sin^2\psi - 2\tau\mu\sqrt{1-\sin^2\psi}\csc\theta_B}\right)\sin\theta_B\right], \quad (10)$$

$$\theta_d = \arccos\frac{1 + P\sin\theta_s}{\sqrt{1 + P^2 + 2P\sin\theta_s}},$$

$$2\theta\chi = \arccos\frac{\cos 2\theta_B}{\cos(\theta_s + \theta_d)},$$

$$\phi = \varphi - \arctan\frac{\sin 2\theta\chi}{\cos\theta_s - \cos\theta_d \cos 2\theta\chi},$$

wherein the parameter P is determined by

$$P = \frac{\left(\sqrt{1-\sin^2\psi} + \sqrt{1-\sin^2\psi - 2\tau\mu\sqrt{1-\sin^2\psi}\csc\theta_B}\right)\sin\theta_B}{\cos 2\theta_B},$$

In the expression for $2\theta\chi$, the argument under arccos might be positive if $2\theta_B \leq \pi/2$ or negative in the case if $2\theta_B \geq \pi/2$.

The accessible region for $\sin^2\Psi$ and $\tau$ values is obtained by analyzing the equation (10). From the requirement for the angles $\theta_s$, $\theta_d$, $2\theta\chi$ to be real-valued and to fall into the range between 0 and 90 degree, one can obtain the following conditions:

$$\sin^2\psi < 1 - \left(\frac{2\tau\mu}{\sin\theta_B}\right)^2, \quad (11)$$

$$\sin^2\psi > 1 - \frac{1}{4}\left(\sqrt{2}\sqrt{1 + \tau^2\mu^2 + \cos\theta_B - \tau^2\mu^2\cos\theta_B} + 2\tau\mu\sin\theta_B\right)^2, \quad (12)$$

$$\tau\mu > -\frac{\cos\theta_B}{2\cos\psi\sin\theta_B}, \quad (13)$$

the last inequality being valid only for Bragg angles larger than 90 degree.

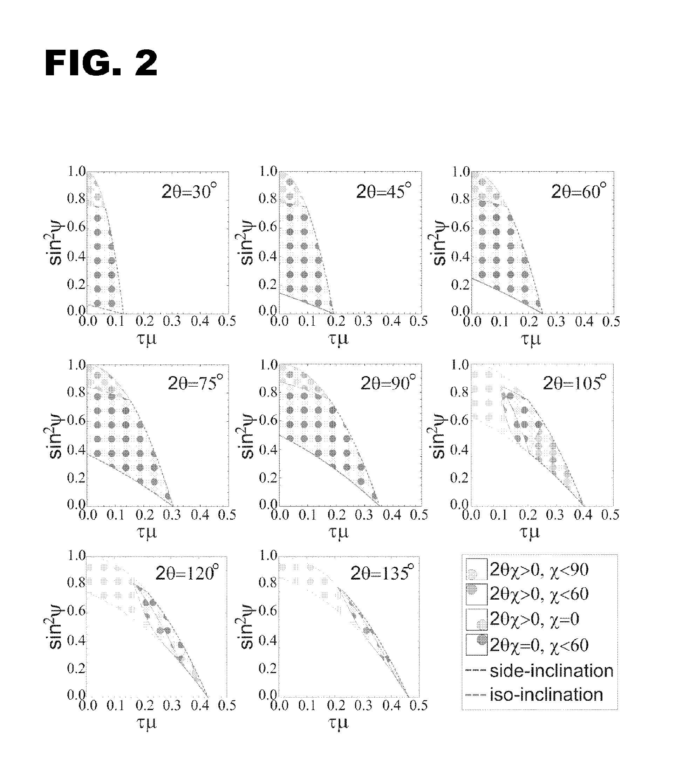

**Figure 2** represents the comparison between accessible regions in $\sin^2\Psi$ and $\tau\mu$ space. In the case of traditional measurement modes, such as side-inclination ($\theta_s = \theta_d = \theta_B$, $2\theta\chi = 0$, $0 < \chi < \chi_{max}$) and iso-inclination ($\theta_s + \theta_d = 2\theta_B$, $0 < \theta_s < \theta_{smax}$,

$2\theta\chi=0$, $\chi=0$), the accessible regions in $\sin^2\Psi$ and $\tau\mu$ space are given by dashed lines, as can be seen in Figure 2. To cover the area between these lines, one has to use mixed mode when all goniometer angles are varied. Naturally, the largest coverage of the $\sin^2\Psi$ - $\tau\mu$ space is achieved by simultaneous usage of all four angles $\theta_s$, $\theta_d$, $2\theta\chi$ and $\chi$. For actual measurements, high values of the sample tilt $\chi$ are not used in practice due to large beam footprint and increased peak asymmetry. If the upper limit of $\chi$ is restricted to a realistic value of 60 degree, it can be seen that, in the case of Bragg angles below 90 degree, the area of high $\sin^2\Psi$ values is not accessible without the in-plane arm rotation ($2\theta\chi$ = 0). If one uses the in-plane arm rotation ($2\theta\chi > 0$), the same area can be covered even for a tilt angle of zero ($\chi = 0$). In the case of Bragg angles above 90 degree, the in-plane arm usage also significantly increases the accessible space. With zero tilt angle and in-plane arm rotation, one cannot access the low values of $\tau\mu$, however, these values can be explored using reflections corresponding to lower Bragg angles.

EXAMPLE

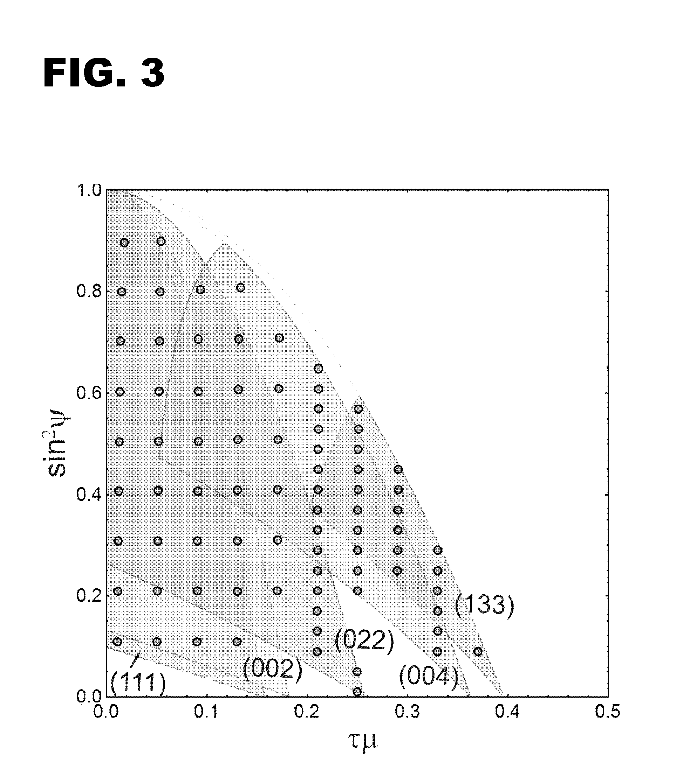

To demonstrate the above, a hard titanium nitride (TiN) coating with a thickness of 11.5 $\mu$m was used as a sample for stress gradient analysis. The accessible areas in $\sin^2\Psi$ and $\tau\mu$ space are shown in the diagram of **Figure 3** for the case of several strong reflections of TiN. One can see that the areas with low $\tau\mu$ are well covered by low-index reflections, whereas the access to higher values of $\tau\mu$ can be provided only by reflections corresponding to $2\theta_B$ angles above 90 degree. Theoretically, provided with a continuous range of reflections with Bragg angles in the range $0 < 2\theta_B < 180$, one could access the area $\sin2\Psi < 1-(2\tau\mu)^2$.

The vertical lines in $\sin^2\Psi$ - $\tau\mu$ space correspond to $\sin^2\Psi$ plots measured at fixed $\tau$ values. By processing such $\sin^2\Psi$ plots measured for different values, one can obtain the stress profile in Laplace space at optimum in the range of $0 < \tau\mu < 1/2$. In the case of high $\tau\mu$ values, the $\sin^2\Psi$ region is quite narrow, so the errors are expected to be higher.

Conclusions

As shown by the example, the present invention provides an effective method for stress gradient determination in thin films and coatings. The essential advantage of the proposed technique is that no sample inclination is required during measurements. This is important in the case when the sample under investigation has a big size and is difficult to handle, or during *in situ* high-temperatiure studies.

The invention also provides the analytical expressions for the angles which should be varied during the scanning. The method allows to obtain a more detailed knowledge about residual stress profiles without sample inclination. For example, these equations can be used for calculating the points for measurements for different thin films and coatings with a residual stress gradient by a laboratory diffractometer equipped with an in-plane arm.

REFERENCES

1. Ch. Genzel et al., in Modern Diffraction Methods, Wiley-VCH, Weinheim, 2012, pp. 127-154
2. I. Noyan and J. Cohen. Residual Stress. Measurement by Diffraction and Interpretation, Springer-Verlag, Heidelberg, 1987
3. B. He., Powder Diffraction 2003, Vol. 18, p. 71
4. M. Birkholz. Thin Films Analysis by X-ray Scattering, WILEY-VCH, Weinheim, 2006.
5. M. Bartosik et al., Adv. Eng. Mat. 2011, Vol. 13, No. 8, pp. 705-711
6. Ch. Genzel, J. Appl. Cryst. 1999, Vol. 32, pp. 770-778
7. Ch. Genzel et al., Strain Analysis 2011, Vol. 46, pp. 615-625
8. Th. Erbacher et al., J. Appl. Cryst. 2008, Vol. 41, pp. 377-385
9. A. Kumar et al., J. Appl. Cryst. 2006, Vol. 39, pp. 633-646
10. U. Welzel et al., J. Appl. Cryst. 2005, Vol. 38, pp. 1-29

**Claims**

1. A method for determining a residual stress gradient in a sample using X-ray diffraction, wherein the sample is supported on a sample holder defining a sample plane, the method comprising the steps of

- irradiating a beam from an X-ray source onto the sample and detecting a beam diffracted by the sample with an X-ray detector having two degrees of freedom, wherein the directions of the incident beam and/or the diffracted beam are varied in relation to the sample and the position of the X-ray detector is varied in two degrees of freedom, and
- determining the values $\sin^2\Psi$ and $\tau\mu$, which are representative for the residual stress gradient in the sample, as a function of the X-ray source and x-ray detector positions taking into account the two degrees of freedom of the detector, wherein $\Psi$ is the polar angle, $\tau$ is the penetration depth of the beam into the sample, and $\mu$ is the mass attenuation coefficient of the sample,
**characterized in that** the variation of the directions of the incident beam and/or the diffracted beam comprises a rotation of the diffracted beam by an angle $2\theta\chi$ within a plane that is inclined against the sample plane, designated in-plane arm rotation.

2. The method of claim 1, wherein the variation of the directions of the incident beam and/or the diffracted beam further comprises one or more of the following: an inclination of the incident beam against the sample plane by an angle $\theta_s$, an inclination of the plane of in-plane arm rotation against the sample plane by an angle $\theta_d$, and a rotation of the sample around the normal of the sample plane by an angle $\varphi$.

3. The method of claim 1 or claim 2, wherein the variation of the directions of the incident beam and/or the diffracted beam further comprises an inclination of the sample against the sample plane by an angle $\chi$.

4. The method of any one of the preceding claims, wherein $\sin^2\Psi$ and $\tau\mu$ are determined according to the following equations:

$$\sin^2\psi(\theta_s,\theta_d,2\theta\chi,\chi) = 1 - \frac{(\cos\chi\,(\cos 2\theta\chi\,\sin\theta_d + \sin\theta_s) + \sin 2\theta\chi\,\sin\chi)^2}{2 - 2\cos(\theta_d + \theta_s)\cos 2\theta\chi},$$

$$\tau\mu(\theta_s,\theta_d) = \frac{1}{\csc\theta_s + \dfrac{1}{\cos 2\theta\chi\,\sin\theta_d}},$$

5. The method of any one of the preceding claims, wherein the method is perfomed using an X-ray diffractometer comprising the X-ray source, the X-ray detector and the sample holder.

6. The method of any one of the preceding claims, wherein the variations of $\theta_s$, $\theta_d$ and $2\theta\chi$ are effected by moving the X-ray source and/or the X-ray detector, and the variations of $\varphi$ and $\chi$ are effected by moving the sample.

7. The method of any one of the preceding claims, wherein the penetration depth $\tau$ is between 0 and about $1/(2\mu)$.

8. The method of any one of the preceding claims, wherein the sample is a film or surface coating.

9. The method of claim 8, wherein the sample is a titanium nitride (TiN) coating.

10. The method of claim 8 or claim 9, wherein the film or coating has a thickness of about 1 to about 15 $\mu$m.

# FIG. 1

# FIG. 2

**FIG. 3**

Europäisches
Patentamt

European
Patent Office

Office européen
des brevets

# EUROPEAN SEARCH REPORT

Application Number

EP 14 16 6206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | A. KUMAR ET AL: "A method for the non-destructive analysis of gradients of mechanical stresses by X-ray diffraction measurements at fixed penetration/information depths", JOURNAL OF APPLIED CRYSTALLOGRAPHY, vol. 39, no. 5, 12 September 2006 (2006-09-12), pages 633-646, XP055140409, ISSN: 0021-8898, DOI: 10.1107/S0021889806023417 * abstract * * page 634, right-hand column, paragraph 4 - page 638, left-hand column, paragraph 1 * * page 638, right-hand column, paragraph 7 - page 639, left-hand column, paragraph 1 * * page 643, left-hand column, paragraph 5 - right-hand column, paragraph 2 * * figures 1,4,13 * | 1-3,5-10 | INV. G01N23/20 G01N23/207 G01L1/25 |
| Y | SHINTARO KOBAYASHI: "X-ray thin-film measurement techniques IV. In-plane XRD measurements", THE RIGAKU JOURNAL, vol. 26, no. 1, 31 December 2010 (2010-12-31), pages 3-11, XP055140435, ISSN: 2187-9974 * page 3, left-hand column, paragraph 1 * * page 7, left-hand column, paragraph 3 - right-hand column, paragraph 5 * * page 9, right-hand column, paragraph 3 * * figure 9 * | 1-3,5-10 | TECHNICAL FIELDS SEARCHED (IPC) G01N G01L |

-----

-----

-/--

The present search report has been drawn up for all claims

| Place of search | Date of completion of the search | Examiner |
|---|---|---|
| The Hague | 16 September 2014 | Couteau, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches Patentamt

European Patent Office

Office européen des brevets

## EUROPEAN SEARCH REPORT

**Application Number**

EP 14 16 6206

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/136236 A1 (MORIKAWA KEIICHI [JP] ET AL) 30 May 2013 (2013-05-30) <br> * paragraphs [0053] - [0090] * <br> * figure 3 * <br> ----- | 1-10 | |

TECHNICAL FIELDS SEARCHED (IPC)

The present search report has been drawn up for all claims

| Place of search | Date of completion of the search | Examiner |
|---|---|---|
| The Hague | 16 September 2014 | Couteau, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 6206

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2014

| Patent document cited in search report | Publication date | Patent family member(s) | Publication date |
|---|---|---|---|
| US 2013136236 A1 | 30-05-2013 | JP 5511020 B2<br>JP 2013108940 A<br>US 2013136236 A1 | 04-06-2014<br>06-06-2013<br>30-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BARTOSIK et al.** *Adv. Eng. Mat.,* 2011, vol. 13 (8), 705-711
- **U. WELZEL et al.** *J. Appl. Cryst.,* 2005, vol. 38, 1-29
- **CH. GENZEL.** *J. Appl. Cryst.,* 1999, vol. 32, 770-778
- **CH. GENZEL et al.** *J. Strain Analysis,* 2011, vol. 46, 615-625
- **CH. GENZEL et al.** Modern Diffraction Methods. Wiley-VCH, 2012, 127-154
- **TH. ERBACHER et al.** *J. Appl. Cryst.,* 2008, vol. 41, 377-385
- **KUMAR et al.** *J. Appl. Cryst.,* 2006, vol. 39, 633-646
- **I. NOYAN ; J. COHEN.** Residual Stress. Measurement by Diffraction and Interpretation. Springer-Verlag, 1987
- **B. HE.** *Powder Diffraction,* 2003, vol. 18, 71
- **M. BIRKHOLZ.** Thin Films Analysis by X-ray Scattering. WILEY-VCH, 2006
- **BARTOSIK et al.** *Adv. Eng. Mat.,* 2011, vol. 13 (8), 705-711
- **CH. GENZEL et al.** *Strain Analysis,* 2011, vol. 46, 615-625
- **WELZEL et al.** *J. Appl. Cryst.,* 2005, vol. 38, 1-29